(19) Europäisches Patentamt
European Patent Office
Office européen des brevets

(11) **EP 4 113 183 B1**

(12) **EUROPEAN PATENT SPECIFICATION**

(45) Date of publication and mention
of the grant of the patent:
**19.02.2025 Bulletin 2025/08**

(21) Application number: **20921467.5**

(22) Date of filing: **28.02.2020**

(51) International Patent Classification (IPC):
**G02B 6/46** *(2006.01)*        **G02B 6/44** *(2006.01)*

(52) Cooperative Patent Classification (CPC):
**G02B 6/44785**

(86) International application number:
**PCT/JP2020/008477**

(87) International publication number:
**WO 2021/171603 (02.09.2021 Gazette 2021/35)**

(54) **OPTICAL FIBER CABLE GRIPPING DEVICE**

GREIFVORRICHTUNG FÜR GLASFASERKABEL

DISPOSITIF DE PRÉHENSION DE CÂBLE À FIBRE OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.01.2023 Bulletin 2023/01**

(73) Proprietor: **Nippon Telegraph And Telephone Corporation**
**Chiyoda-ku**
**Tokyo 100-8116 (JP)**

(72) Inventors:
• **SAKURAI, Akira**
**Musashino-shi, Tokyo 180-8585 (JP)**
• **TANIOKA, Hiroaki**
**Musashino-shi, Tokyo 180-8585 (JP)**
• **IZUMITA, Hisashi**
**Musashino-shi, Tokyo 180-8585 (JP)**
• **YAMADA, Yusuke**
**Musashino-shi, Tokyo 180-8585 (JP)**
• **MARUO, Yuta**
**Musashino-shi, Tokyo 180-8585 (JP)**

(74) Representative: **Bobbert & Partner**
**Patentanwälte PartmbB**
**Postfach 1252**
**85422 Erding (DE)**

(56) References cited:
**EP-A2- 0 936 393        DE-A1- 4 108 852**
**JP-A- 2017 215 438      KR-B1- 101 514 056**
**US-A1- 2007 261 880     US-A1- 2012 124 784**
**US-A1- 2017 343 759**

**Description**

Technical Field

The present disclosure relates to an optical fiber cable holding device for holding an optical fiber cable.

Background Art

In an optical fiber cable used for communication, a tension member such as steel wire is disposed to prevent an optical fiber core from being stretched more than necessary, for the purpose of securing quality of the communication. In an optical cable connection closure that is used for connection and the like of the optical cable, the optical fiber cable is fixed to prevent bending and damage of optical fibers caused by movement of the optical fiber cable.

For example, Patent Literature 1 discloses that steel wire is suitable for the tension member. Further, Patent Literature 2 discloses a mechanism for bending and press-contact of the tension member and a member for holding an end of a cable.

To lay the optical fiber cable in a section where suppression of electromagnetic induction is required, it is necessary to use a cable including a nonmetallic tension member. An example of the nonmetallic tension member is made of, for example, glass fiber or chemical fiber as a main material. The optical fiber cable is typically required to be housed and fixed in the closure for connection and the like.

Typically, the optical fiber cable is fixed at two positions in the closure. At one of the two positions, the optical fiber cable is held by bending and pressure-contact of the tension member as disclosed in Patent Literature 2. At the other position, the optical fiber cable is held in such a manner that a cable jacket is sandwiched. When the former method is applied to the nonmetallic tension member, the tension member may be damaged because the material of the tension member is fragile unlike a metal, and a holding method to fix the tension member itself is cannot be used. Therefore, the cable is required to be fixed only by the latter method; however, it is not possible to hold the cable with strength sufficient to fix the cable at the single position because large sandwiching force causes buckling deformation of the cable jacket and damages the optical fiber core.

Citation List

Patent Literature

Patent Literature 1: Japanese Patent Publication No. 7-111493
Patent Literature 2: Japanese Patent No. 4209836

US 2007/261880 A1 discloses a prior art cable gripping device.

Summary of the Invention

Technical Problem

The present disclosure is to solve the above-described issues, and an object of the present disclosure is to fix an optical fiber cable having a nonmetallic tension member in a closure without damaging the tension member and a core.

Means for Solving the Problem

The invention to solve the above-described issues is a method to fix an optical fiber cable having a nonmetallic tension member in a closure by using a holding band, and the holding band causes appropriate gripping force and appropriate frictional force to act on the cable, which enables fixing of the cable by holding at a single point and eliminates damage by press-contact of the nonmetallic tension member.

More specifically, an optical fiber cable holding device according to the present invention includes all the features specified in appended claim 1.

Effects of the Invention

According to the present disclosure, it is possible to fix the optical fiber cable having the nonmetallic tension

2

member in the closure without damaging the tension member and the core.

Brief Description of Drawings

[Fig. 1] Fig. 1 is a perspective view illustrating an example of a holding band according to the present disclosure.
[Fig. 2] Fig. 2 is a cross-sectional view illustrating an example of an optical fiber cable.
[Fig. 3] Fig. 3 illustrates a configuration in which the optical fiber cable is held by the holding band in a closure.
[Fig. 4] Fig. 4 illustrates an example of a holding configuration according to an example not being part of the claimed invention, as viewed from a cable longitudinal direction.
[Fig. 5] Fig. 5 illustrates examples of parameters of the optical fiber cable.
[Fig. 6] Fig. 6 illustrates an example of a holding configuration according to the claimed invention, as viewed from the cable longitudinal direction.
[Fig. 7] Fig. 7 illustrates an example of a thin plate elastic body.
[Fig. 8] Fig. 8 illustrates an example of the thin plate elastic body when predetermined pressure is applied to the optical fiber cable.
[Fig. 9] Fig. 9 illustrates an example of a holding configuration.
[Fig. 10] Fig. 10 is an example of an enlarged view of a frictional force application portion.

Description of Embodiments

Some embodiments of the present disclosure are described in detail below with reference to drawings. Note that the present disclosure is not limited to the embodiments described below. These embodiments are merely examples, and the present disclosure can be implemented in forms obtained by variously alternating or modifying the embodiments based on the knowledge of those skilled in the art. Note that, in the present specification and the drawings, components denoted by the same reference numerals mutually denote the same components.

(Example useful for understanding the claimed invention)

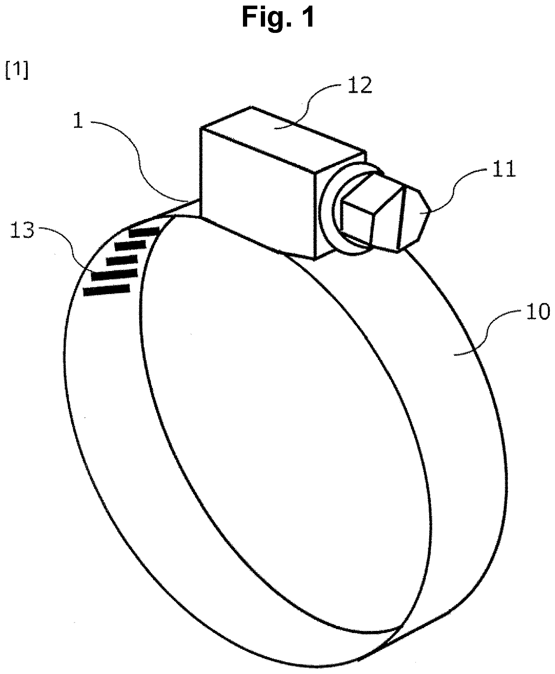

Fig. 1 is a perspective view of a holding band according to the present disclosure. A holding band 1 according to the present disclosure functions as an optical fiber cable holding device, and includes a thin plate portion 10, a band-diameter adjuster 11, a binding mechanism portion 12, and protrusion fitting holes 13.
The holding band 1 is manufactured by processing a metal such as stainless steel or a nonmetallic synthetic resin. The band-diameter adjuster 11 and the binding mechanism portion 12 housing the band-diameter adjuster 11 are connected and fixed to one end of the thin plate portion 10. The protrusion fitting holes 13 to be screwed onto protrusions of the band-diameter adjuster 11 are provided on the other end of the thin plate portion 10. The thin plate portion 10 can pass through the binding mechanism portion 12 by being wound, and the band-diameter adjuster 11 fitted to the protrusion fitting holes 13 is tightened to adjust a diameter of a rough circle formed by the thin plate portion 10 and to have a firm grip on an optical fiber cable 2.

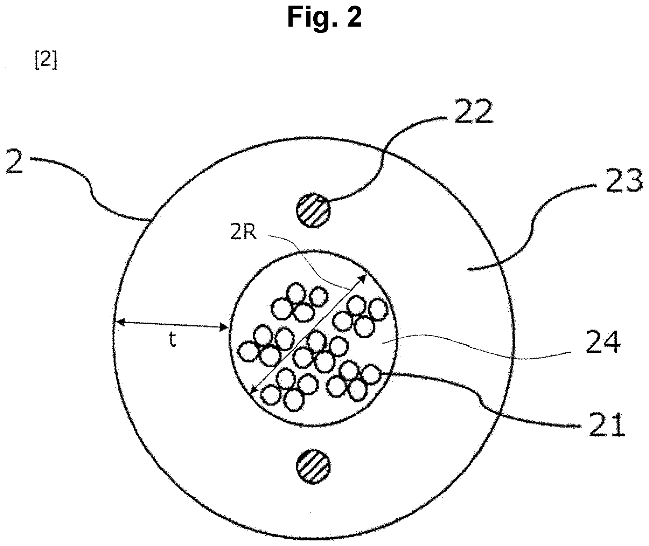

Fig. 2 is a cross-sectional view of the optical fiber cable 2. The optical fiber cable 2 may have a self-supporting structure used for a case where the optical fiber cable 2 is laid between utility poles or is laid from a utility pole to a subscriber home. In this case, a supporting line is separated and the optical fiber cable 2 includes only a main body portion. The optical fiber cable 2 includes optical fibers 21, tension members 22 and a jacket 23 that is made of thermoplastic resin. Note that the configuration of the optical fiber cable 2 is not limited hereto as long as the optical fibers 21 are disposed inside an inner cavity 24. The optical fibers 21 transmit optical signals used for communication. The tension members 22 have a function to prevent the optical fibers 21 from being damaged by application of excessive tension on the optical fibers 21 in a longitudinal direction. The tension members 22 are each made of nonmetallic material such as glass fiber reinforced plastic, and does not cause electromagnetic induction.

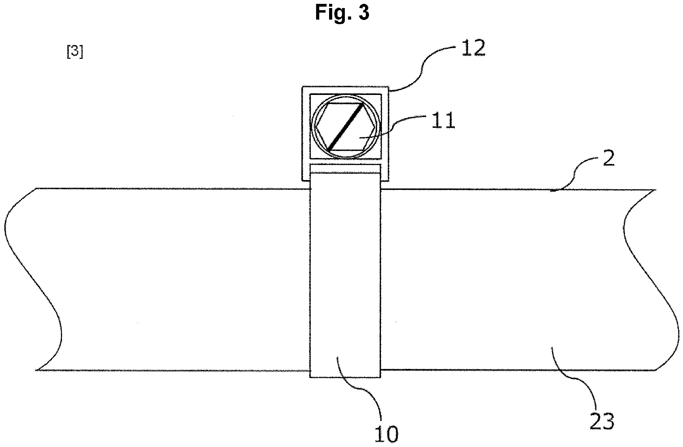

Fig. 3 illustrates a configuration in which the optical fiber cable 2 is held by the holding band 1 in a closure. The holding band 1 is attached and wound around the optical fiber cable 2. The binding mechanism portion 12 has a shape engageable with a screwing tool such as a driver and a wrench, and can apply appropriate tightening pressure to the optical fiber cable 2. The optical fiber cable 2 is fixed only by the holding band 1. The tension members 22 themselves are not directly and mechanically press-fixed in the closure. Therefore, even when the tension members 22 are each made of a nonmetallic material, the tension members 22 are not damaged. In addition, fixing only by the holding band 1 makes it possible to improve work efficiency. Note that a member to be fixed to the closure may be attached to the holding band 1.

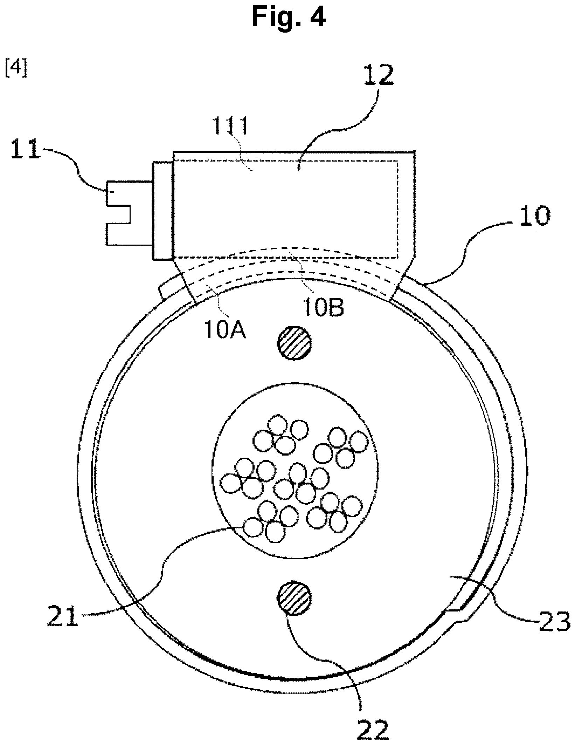

Fig. 4 illustrates the holding configuration as viewed from the cable longitudinal direction, and illustrates a mechanism applying pressure to the optical fiber cable 2. One end 10A of the thin plate portion 10 is fixed to the binding mechanism portion 12. The other end 10B of the thin plate portion 10 is provided with the protrusion fitting holes 13, and the protrusion fitting holes 13 fit onto protrusions of a convex portion 111 of the band-diameter adjuster 11. The holding band 1 can have a firm grip on the optical fiber cable 2 such that the thin plate portion 10 comes into close contact with the optical fiber cable 2, and can uniformly apply the pressure in a circumferential direction. The holding band 1 can prevent buckling deformation of the optical fiber cable 2 and the jacket 23 in a case where the pressure is applied to the optical fiber cable 2 and the jacket 23 in one direction.

Deformation of the jacket 23 occurred by applying the pressure to the optical fiber cable 2 causes contraction of an area of the inner cavity of the optical fiber cable 2. The plurality of optical fibers 21 stored in the optical fiber cable 2 closely contact with one another to generate excessive bending, which influences communication. In a condition where pressure p in a radial direction is applied to the circular optical fiber cable 2 along the circumference, a reduction amount $\Delta R$ of a radius R of the inner cavity of the optical fiber cable 2 can be determined by an expression (1) with use of a Young's module E of the jacket 23.

(Math. 1)

$$\Delta R = pR^2/tE \qquad (1)$$

In a condition where the optical fiber cable 2 is gripped by the holding band 1, a cross-sectional area S that is a limit for influence on the communication is determined by an expression (2).

(Math. 2)

$$S = p(R - \Delta R)^2 \qquad (2)$$

Therefore, the pressure p to fix the optical fiber cable 2 can be increased to a value determined by an expression (3).

(Math. 3)

$$p = \frac{tE\left(R - \sqrt{S/\pi}\right)}{R^2} \qquad (3)$$

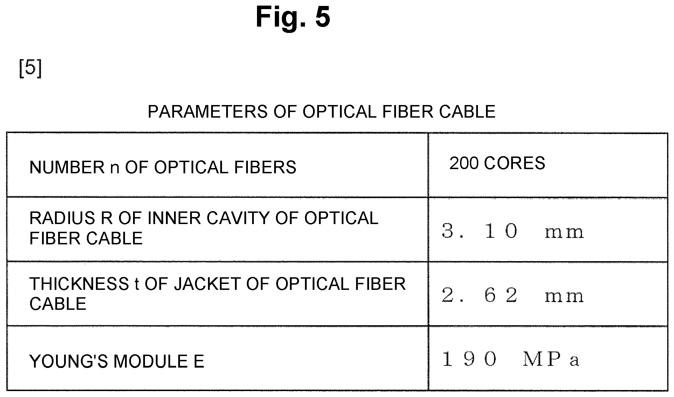

As an example, a test in which crushing pressure is applied so as to sandwich two points of a commercially-available optical fiber cable having specifications of Fig. 5 was performed. As a result, loss occurred on the optical fiber when the cross-sectional area S reached $15.3 \, cm^2$. Therefore, the holding band 1 satisfies an expression of the pressure p $\leq 46$ MPa to fix the optical fiber cable, as gripping force.

When the optical fiber cable 2 is stretched in such a manner that one end of the optical fiber cable 2 is held in the closure and the other end is anchored to a utility pole or the like, tension in the longitudinal direction occurs on the optical fiber cable 2 due to action of a weight of the cable itself, a wind pressure load applied to the cable, and the like. Hereat, to fix the optical fiber cable 2 in the closure, it is necessary to satisfy an expression (4),

(Math. 4)

$$F \leq 2\pi\mu w(R + t)p, \qquad (4)$$

where w is a width of the thin plate portion 10 of the holding band 1, $\mu$ is a static friction coefficient between the thin plate portion 10 and the optical fiber cable 2, and F is the tension applied to the optical fiber cable in the longitudinal direction of the optical fiber cable. Therefore, the holding band 1 satisfies the gripping force expressed by an expression (5).

(Math. 5)

$$F/2\pi\mu w(R + t) \leq p \qquad (5)$$

(Embodiment according to the claimed invention )

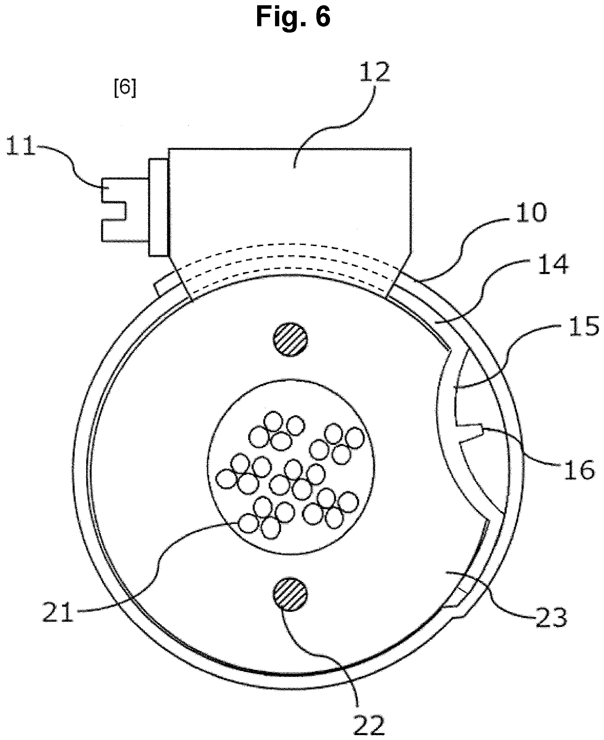

Fig. 6 illustrates an example of a holding configuration according to the claimed invention. The holding band 1 according to the claimed invention further includes a thin plate elastic body 14, an elastic curved portion 15, and a protrusion 16.

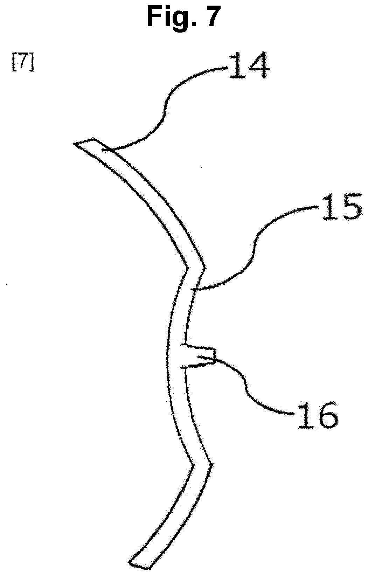

The gripping force expressed by the above-described expression (5) is realized by the thin plate elastic body 14 illustrated in Fig. 7. The thin plate elastic body 14 includes the elastic curved portion 15 that is curved in an elliptical shape so as to externally contact with the jacket 23 of the optical fiber cable. When the pressure occurring on an external contact point between the elastic curved portion 15 and the optical fiber cable 2 is increased by tightening the band-diameter adjuster 11, a curvature of the elastic curved portion 15 is reduced.

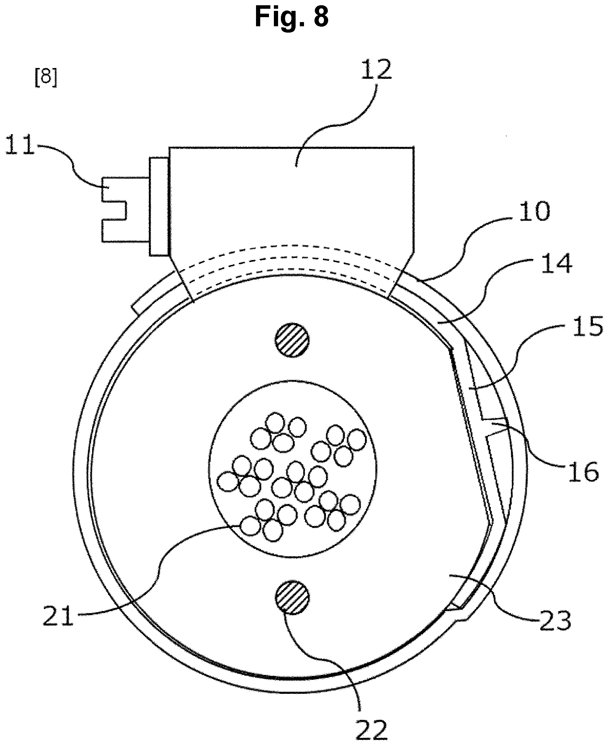

The elastic curved portion 15 includes the protrusion 16 on a rear surface of the external contact point with the optical fiber cable 2. When the pressure is applied to the optical fiber cable 2 and the above-described curvature is reduced, the protrusion 16 is caused to fit into one of the protrusion fitting holes 13 as illustrated in Fig. 8, and the band-diameter adjuster 11 is not rotated any more.

(Example useful for understanding the claimed invention)

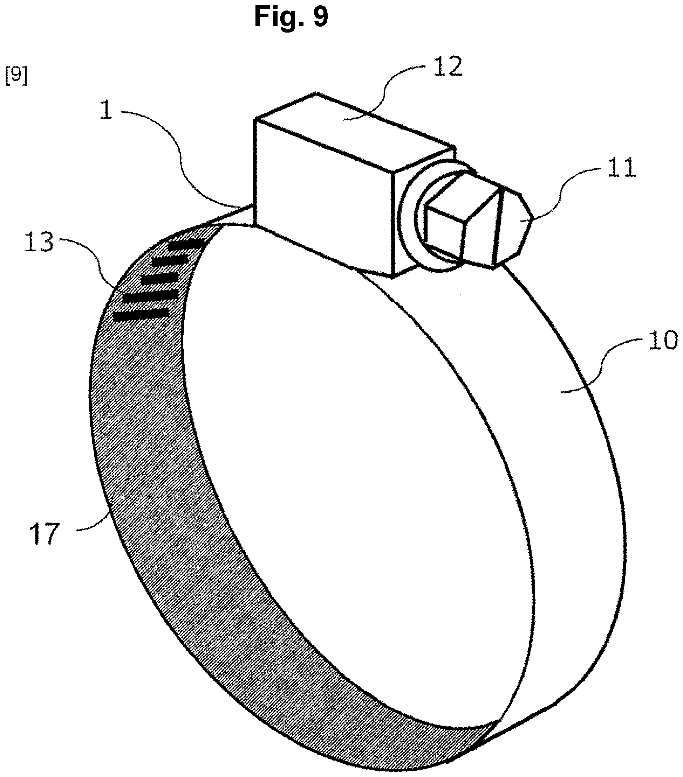

In a configuration illustrated in Fig. 9, a frictional force application portion 17 is added to a surface of the thin plate portion 10. The frictional force application portion 17 increases frictional force on a surface of the holding band 1 contacting with the optical fiber cable 2, which makes it possible to fix the optical fiber cable 2 in the closure when the tension in the cable longitudinal direction occurs on the optical fiber cable 2. The frictional force application portion 17 is realized by, for example, application of a friction material or formation of roughnesses on the thin plate portion. The configuration according to the present example is applicable to the example and the embodiment previously described.

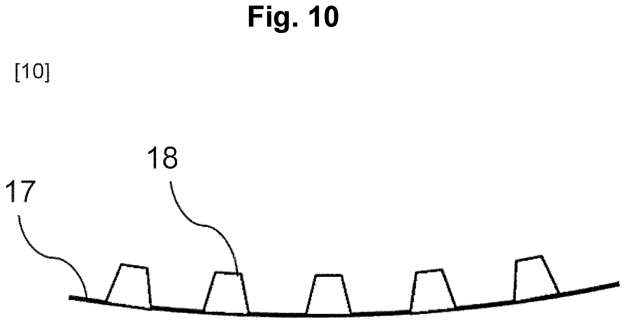

Fig. 10 illustrates an example of holding protrusions 18 formed by the friction material added to the frictional force application portion 17 or the roughnesses provided on the thin plate portion 10. A shape of each of the holding protrusions 18 does not damage the jacket 23, and does not influence on the optical fibers 21 inside the optical fiber cable 2 and on communication. Further, the shape of each of the holding protrusions 18 may have a height smaller than a thickness of the jacket of the optical fiber cable 2, and may be a symmetric protrusion or may be an asymmetric shape to bite into the jacket 23, which is deformed due to the tension applied in the longitudinal direction.

The above-described frictional force application portion and the above-described holding protrusions are added to increase the static frictional coefficient $\mu$ acting between the jacket of the optical fiber cable and the holding portion, thereby sufficiently satisfying the following expression. This makes it possible to surely fix the optical fiber cable without applying pressure causing loss of the optical fibers.

(Math. 6)

$$\mu \geq \frac{R^2 F}{2\pi wtE(R+t)\left(R - \sqrt{S/\pi}\right)} \qquad (6)$$

The above-described embodiments do not limit the present invention, which is defined by the appended claims.

Industrial Applicability

The present disclosure is applicable to information and communication industry.

Reference Signs List

1        Holding band
10        Thin plate portion
11        Band-diameter adjuster
12        Binding mechanism portion
13        Protrusion fitting hole
14        Thin plate elastic body
15        Elastic curved portion
16, 111        Protrusion
17        Frictional force application portion
18        Holding protrusion
2        Optical fiber cable
21        Optical fiber
22        Tension member
23        Jacket
24        Inner cavity

**Claims**

1. An optical fiber cable holding device, comprising:

a thin plate portion (10) configured, by bending a rectangular thin plate in a length direction thereof into a shape of a rough circle, to hold an outer periphery of an optical fiber cable (2);
a binding mechanism portion (12) fixed on one end of the thin plate portion (10) and configured to bind the thin plate portion (10) wound around the optical fiber cable (2) on the one end of the thin plate portion (10);
protrusion fitting holes (13) provided on the other end of the thin plate portion (10) wound around the optical fiber cable (2); and
a band-diameter adjuster (11) fixed to the binding mechanism portion (12), including a band diameter adjuster protrusion (111) fittable into each of the protrusion fitting holes (13), and configured to adjust a diameter of the rough circle by changing from one hole to another hole of the protrusion fitting holes (13) to be fitted onto the band diameter adjuster protrusion (111),
**characterized in that**
the thin plate portion (10) includes a mechanism to limit pressure, applied from the thin plate portion (10) to the optical fiber cable (2), to a predetermined value or less,
wherein the thin plate portion (10) includes a thin plate elastic body (14)
wherein the thin plate elastic body (14) comprises an elastic curved portion (15), which is curved to protrude toward the optical fiber cable (2) to externally contact with it,
wherein the elastic curved portion (15) includes, on a rear surface not contacting with the optical fiber cable (2), a thin plate elastic body protrusion (16),
wherein the thin plate portion (10) is configured such that,
by predetermined pressure occurring between the thin plate elastic body (14) and the optical fiber cable (2), a curvature of the thin plate elastic body (14) is reduced, the thin plate elastic body protrusion (16) is caused to fit into one of the protrusion fitting holes (13) of the thin plate portion (10), and the diameter of the rough circle is fixed.

2. The optical fiber cable holding device according to claim 1, wherein the predetermined value satisfies the following expression,
[Math. C1]

$$\frac{F}{2\pi\mu w(R+t)} \leqq p \leqq \frac{tE\left\{R-\sqrt{\frac{S}{\pi}}\right\}}{R^2} \qquad (C\,1)$$

where p is pressure applied to the optical fiber cable (2), R is a radius of an inner cavity (24) of the optical fiber cable (2), t is a thickness of a jacket (23) of the optical fiber cable (2), E is a Young's module of the jacket (23), S is a cross-sectional area of the inner cavity (24), w is a width of the thin plate portion (10), $\mu$ is a static friction coefficient acting between the jacket (23) of the optical fiber cable (2) and the thin plate portion (10), and F is tension applied to the optical fiber cable (2) in a longitudinal direction of the optical fiber cable (2).

3. The optical fiber cable holding device according to any one of claims 1 and 2, wherein a friction material having a static frictional coefficient higher than a static friction coefficient of the thin plate portion (10) is provided on a surface, contacting with the optical fiber cable (2), of the thin plate portion (10).

4. The optical fiber cable holding device according to

any one of claims 1 to 3, wherein
the thin plate portion (10) includes a holding protrusion (18) that fixes the optical fiber cable (2) when tension is applied to the optical fiber cable (2) in a longitudinal direction of the optical fiber cable (2), and
a height of the holding protrusion (18) is smaller than a thickness of a jacket of the optical fiber cable (2).

**Patentansprüche**

1. Vorrichtung zum Halten eines optischen Glasfaserkabels, umfassend:

- einen Dünnplattenabschnitt (10), der durch Biegen einer rechteckigen Dünnplatte in Längsrichtung in eine annähernd kreisförmige Form ausgebildet ist, um den Außenumfang eines optischen Glasfaserkabels (2) zu halten;

- einen Bindemechanismusabschnitt (12), der an einem Ende des Dünnplattenabschnitts (10) befestigt ist und eingerichtet ist, den um das optische Glasfaserkabel (2) herumgewickelten Dünnplattenabschnitt (10) an dem einen Ende des Dünnplattenabschnitts (10) zu binden;

- Vorsprungsaufnahmelöcher (13), die an dem anderen Ende des um das optische Glasfaserkabel (2) herumgewickelten Dünnplattenabschnitts (10) vorgesehen sind; und

- einen Banddurchmessereinsteller (11), der an dem Bindemechanismusabschnitt (12) befestigt ist, einen Banddurchmessereinstellvorsprung (111) aufweist, welcher jeweils in eines der Vorsprungsaufnahmelöcher (13) einsetzbar ist, und eingerichtet ist, durch Wechsel von einem Loch zu einem anderen Loch der Vorsprungsaufnahmelöcher (13) für das Einsetzen auf den Banddurchmessereinstellvorsprung (111), den Durchmesser der annähernd kreisförmigen Form einzustellen,

**dadurch gekennzeichnet, dass**
der Dünnplattenabschnitt (10) einen Mechanismus aufweist, um den vom Dünnplattenabschnitt (10) auf das optische Glasfaserkabel (2) ausgeübten Druck auf einen vorbestimmten Wert oder weniger zu begrenzen, wobei der Dünnplattenabschnitt (10) einen Dünnplattenelastikkörper (14) umfasst,
wobei der Dünnplattenelastikkörper (14) einen elastischen Krümmungsabschnitt (15) aufweist, welcher so gekrümmt ist, dass er in Richtung des optischen Glasfaserkabels (2) vorsteht und außen mit ihm in Kontakt kommt,
wobei der elastische Krümmungsabschnitt (15) auf einer Rückseite, die nicht mit dem optischen Glasfaserkabel (2) in Berührung kommt, einen Vorsprung des Dünnplattenelastikkörper (16) aufweist,
wobei der Dünnplattenabschnitt (10) so ausgebildet ist, dass bei Auftreten eines vorbestimmten Drucks zwischen dem Dünnplattenelastikkörper (14) und dem optischen Glasfaserkabel (2) eine Krümmung des Dünnplattenelastikkörper (14) verringert wird, wodurch der Vorsprung des Dünnplattenelastikkörper (16) in eines der Vorsprungsaufnahmelöcher (13) des Dünnplattenabschnitts (10) eingreift und der Durchmesser der annähernd kreisförmigen Form fixiert wird.

2. Die Vorrichtung zum Halten des optischen Glasfaserkabels (2) nach Anspruch 1, wobei der vorbestimmte Wert den folgenden Ausdruck (C1) erfüllt:
[Math. C1]

$$\frac{F}{2\pi\mu w(R+t)} \leqq p \leqq \frac{tE\left\{R-\sqrt{\frac{S}{\pi}}\right\}}{R^2} \qquad (C\,1)$$

wobei

p den auf das optische Glasfaserkabel (2) ausgeübten Druck darstellt,
R den Radius eines Innenhohlraums (24) des optischen Glasfaserkabels (2),
t die Dicke eines Mantels (23) des optischen Glasfaserkabels (2),
E den Elastizitätsmodul des Mantels (23),
S die Querschnittsfläche des Innenhohlraums (24),
w die Breite des Dünnplattenabschnitts (10),
$\mu$ den zwischen dem Mantel (23) des optischen Glasfaserkabels (2) und dem Dünnplattenabschnitt (10) wirkenden statischen Reibungskoeffizienten,
F die in Längsrichtung auf das optische Glasfaserkabel (2) ausgeübte Zugkraft,
bezeichnet.

3. Die Vorrichtung zum Halten des optischen Glasfaserkabels (2) nach Anspruch 1 oder 2, wobei auf einer mit dem optischen Glasfaserkabel (2) in Kontakt stehenden Oberfläche des Dünnplattenabschnitts (10) ein Reibungsmaterial mit einem höheren statischen Reibungskoeffizienten als der statische Reibungskoeffizient des Dünnplattenabschnitts (10) vorgesehen ist.

4. Die Vorrichtung zum Halten des optischen Glasfaserkabels (2) nach einem der Ansprüche 1 bis 3, wobei der Dünnplattenabschnitt (10) einen Haltevorsprung (18) aufweist, der das Glasfaserkabel (2) fixiert, wenn eine Zugkraft in Längsrichtung auf das optische Glasfaserkabel (2) ausgeübt wird, und wobei die Höhe des Haltevorsprungs (18) kleiner ist als die Dicke des Mantels des optischen Glasfaserkabels (2).

**Revendications**

1. Un dispositif de maintien de câble à fibre optique, comprenant :

   - une partie de plaque mince (10) configurée pour maintenir une périphérie extérieure d'un câble à fibre optique (2), en pliant une plaque mince rectangulaire dans le sens de sa longueur en une forme de cercle approximatif;
   - une partie de mécanisme de fixation (12) attachée sur une extrémité de la partie de plaque mince (10) et configurée pour fixer la partie de plaque mince (10) enroulée autour du câble à fibre optique (2) sur une extrémité de la partie de la plaque mince (10);
   - des trous de montage de saillie (13) prévus à l'autre extrémité de la partie de plaque mince (10) enroulée autour du câble à fibre optique (2); et
   - un dispositif d'ajustement du diamètre de la bande (11) attaché à la partie du mécanisme de fixation (12), incluant une saillie d'ajustement du diamètre de la bande (111) adaptable dans chacun des trous de montage de saillie (13), et configuré pour ajuster un diamètre du cercle approximatif en changeant d'un trou à un autre trou parmi les trous de montage de saillie (13) à adapter sur la saillie d'ajustement du diamètre de la bande (111),

   **caractérisé en ce que**
   la partie de plaque mince (10) inclut un mécanisme pour limiter la pression, exercée par la partie de plaque mince (10) sur le câble à fibre optique (2), à une valeur prédéterminée ou inférieure,
   où la partie de plaque mince (10) inclut un corps élastique de plaque mince (14),
   où le corps élastique de plaque mince (14) comprend une partie incurvée élastique (15), qui est incurvée pour faire saillie vers le câble à fibre optique (2) afin d'entrer en contact externe avec celui-ci,
   où la partie incurvée élastique (15) inclut une saillie du corps élastique de plaque mince (16) sur une surface arrière n'entrant pas en contact avec le câble à fibre optique (2),
   où la partie de plaque mince (10) est configurée de telle sorte que, par une pression prédéterminée se produisant entre le corps élastique de plaque mince (14) et le câble à fibre optique (2), une courbure du corps élastique de plaque mince (14) est réduite, la saillie du corps élastique de plaque mince (16) est amenée à s'adapter dans l'un des trous de montage de saillie (13) de la partie de plaque mince (10), et le diamètre du cercle approximatif est fixé.

2. Le dispositif de maintien de câble à fibre optique selon la première revendication, où la valeur prédéterminée satisfait l'expression suivante:
   [Math. C1]

$$\frac{F}{2\pi\mu w(R+t)} \leqq p \leqq \frac{tE\left\{R-\sqrt{\frac{S}{\pi}}\right\}}{R^2} \qquad (C\ 1)$$

   où p est la pression exercée sur le câble à fibre optique (2), R est un rayon d'une cavité interne (24) du câble à fibre optique (2),
   t est une épaisseur d'une gaine (23) du câble à fibre optique (2),
   E est un module de Young de la gaine (23),
   S est une surface de la section transversale de la cavité interne (24),
   w est la largeur de la partie de plaque mince (10),
   $\mu$ est un coefficient de frottement statique agissant entre la gaine (23) du câble à fibre optique (2) et la partie de plaque mince (10), et
   F est la tension exercée sur le câble à fibre optique (2) dans une direction longitudinale du câble à fibre optique (2).

3. Le dispositif de maintien de câble à fibre optique selon l'une quelconque des revendications 1 et 2, où un matériau de friction ayant un coefficient de frottement statique supérieur à un coefficient de frottement statique de la partie de plaque mince (10) est prévu sur une surface de la partie de plaque mince (10), ce matériau de friction entrant en contact avec le câble à fibre optique (2).

4. Le dispositif de maintien de câble à fibre optique selon l'une quelconque des revendications 1 à 3, où la partie de plaque mince (10) comprend une saillie de maintien (18) qui fixe le câble à fibre optique (2) lorsqu'une tension est exercée sur le câble à fibre optique (2) dans une direction longitudinale du câble à fibre optique (2), et une hauteur de la saillie de maintien (18) est inférieure à une épaisseur d'une gaine du câble à fibre optique (2).

# Fig. 1

[1]

# Fig. 2

[2]

**Fig. 3**

[3]

## Fig. 4

[4]

# Fig. 5

[5]

PARAMETERS OF OPTICAL FIBER CABLE

| | |
|---|---|
| NUMBER n OF OPTICAL FIBERS | 200 CORES |
| RADIUS R OF INNER CAVITY OF OPTICAL FIBER CABLE | 3. 1 0 mm |
| THICKNESS t OF JACKET OF OPTICAL FIBER CABLE | 2. 6 2 mm |
| YOUNG'S MODULE E | 1 9 0 M P a |

# Fig. 6

# Fig. 7

[7]

# Fig. 8

# Fig. 9

[9]

# Fig. 10

[10]

**EP 4 113 183 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7111493 A
- JP 4209836 B

- US 2007261880 A1